# EUROPÄISCHE PATENTSCHRIFT

(11) **EP 1 858 632 B1**
(45) Veröffentlichungstag und Bekanntmachung des Hinweises auf die Patenterteilung: **13.03.2013**
(21) Anmeldenummer: 06722991.4
(22) Anmeldetag: 30.01.2006
(51) Int. Cl.: B01D 71/02, B01D 63/02

(54) **VERFAHREN ZUR HERSTELLUNG GASDICHTER UND TEMPERATURBELASTBARER MODULE MIT KERAMISCHEN HOHLFASER- ODER KAPILLARMEMBRANEN**
PROCESS FOR PRODUCING GAS-TIGHT AND TEMPERATURE-STABLE MODULES WITH CERAMIC HOLLOW-FIBRE OR CAPILLARY MEMBRANES
PROCEDES DE PRODUCTION DE MODULES, ETANCHES AUX GAZ ET POUVANT ETRE SOLLICITES EN TEMPERATURE, A MEMBRANES FIBRES CREUSES OU A MEMBRANES CAPILLAIRES CERAMIQUES

(30) Priorität: 26.02.2005 DE 102005008900
(43) Veröffentlichungstag der Anmeldung: 28.11.2007
(73) Patentinhaber: Fraunhofer-Gesellschaft zur Förderung der angewandten Forschung e.V., 80686 München (DE)
(72) Erfinder: STROH, Norbert, 71106 Magstadt (DE); SCHIESTEL, Thomas, 70565 Stuttgart (DE)
(86) Internationale Anmeldenummer: PCT/EP2006/000766
(87) Internationale Veröffentlichungsnummer: WO 2006/089616

(56) Entgegenhaltungen:
- EP-A- 1 370 348
- EP-A- 1 591 157
- WO-A-03/051495
- US-A1- 2003 173 706
- US-A1- 2004 076 874
- PATENT ABSTRACTS OF JAPAN Bd. 2003, Nr. 05, 12. Mai 2003 (2003-05-12) -& JP 2003 019422 A (NOK CORP), 21. Januar 2003 (2003-01-21) -& DATABASE WPI Section Ch, Week 200328 Derwent Publications Ltd., London, GB; Class J01, AN 2003-282966 XP002382275 & JP 2003 019422 A (NOK CORP) 21. Januar 2003 (2003-01-21)
- PATENT ABSTRACTS OF JAPAN Bd. 010, Nr. 355 (C-388), 29. November 1986 (1986-11-29) -& JP 61 157308 A (DAICEL CHEM IND LTD), 17. Juli 1986 (1986-07-17) -& DATABASE WPI Section Ch, Week 198635 Derwent Publications Ltd., London, GB; Class J01, AN 1986-228312 XP002382276 & JP 61 157308 A (DAICEL CHEM IND LTD) 17. Juli 1986 (1986-07-17)

## Beschreibung

Die vorliegende Erfindung betrifft Module umfassend in ihnen befindliche keramische Hohlfaser- oder Kapillarmembranen und Verfahren zu ihrer Herstellung.

Die vorliegende Erfindung findet in erster Linie in der Filtrations- und Separationstechnik Anwendung. Bei diesen Techniken werden unter anderem organische oder anorganische Membranen in Form von Modulen als Trennwerkzeuge für die Flüssigfiltration sowie die Gasseparation eingesetzt. Hohlfaser- oder Kapillarmembranmodule können hierbei zur Separation beziehungsweise Aufreinigung von Gasen und Dämpfen, insbesondere bei Hochtemperaturanwendungen, sowie für die Flüssigfiltration zur Mikro-, Ultra- und Nanofiltration sowie als Membranreaktor eingesetzt werden.

Zur Herstellung von Membranen werden heutzutage nicht nur organische Polymerwerkstoffe verwendet, sondern es kommen auch vermehrt anorganische Materialien zum Einsatz. Dabei steht vor allem die Entwicklung von Membranen aus keramischen Materialien im Vordergrund. Diese besitzen eine Reihe von Vorteilen, wie zum Beispiel eine erhöhte chemische Inertheit, die Beständigkeit gegenüber hohen Temperaturen sowie eine gute mechanische Festigkeit. Seit einiger Zeit werden Filtrationsmodule aus keramischen Materialien eingesetzt.

Neuerdings kommen auch keramische Hohlfaser- und Kapillarmembranen zum Einsatz. Diese bieten gegenüber anderen Membrangeometrien erhebliche Vorteile.

Für den Einsatz dieser keramischen Hohlfaser- und Kapillarmembranen spielt deren Integration in Module eine wichtige Rolle. Solche Membranmodule sollen zum einen chemisch und thermisch belastbar sein, zum anderen müssen sie bei bestimmten Einsatzarten gasdicht abgeschlossen sein. Die Integration von Hohlfasermembranen in Module kann durch die Bildung einer Einbettung, auch Pottung genannt, aus einer Vergussmasse, auch Pottungsmasse oder fließfähiges Verbindungsmaterial genannt, erfolgen.

Der Bau von chemisch und thermisch belastbaren Modulen mit keramischen Hohlfaser- oder Kapillarmembranen erfordert die Anpassung von Pottmaterialien und Potttechniken.

Ein geeignetes Material zur Verwendung als Vergussmasse ist daher in bevorzugter Ausführungsform der gleiche keramische Stoff, aus dem die keramischen Hohlfasermembranen selbst hergestellt sind. Wegen der optimalen Kompatibilität bietet sich eine Vergussmasse aus Keramik an. Diese lässt sich, verwendet man sie allein in einer einzigen Schicht, allerdings in der Regel nicht gasdicht sintern, da dann auch die keramischen Hohlfasermembranen irreversibel verändert werden.

Aus der EP 0 941 759 A1 ist ein Verfahren zur Herstellung eines Hohlfasermembranmoduls bekannt, bei dem gesinterte Hohlfasern in eine Form eingebracht und in dieser Form mit einem Vergussmaterial vergossen werden. Als Vergussmaterial wird eine keramikhaltige Masse eingesetzt, die anschließend in einem geeigneten Temperaturschritt ausgehärtet beziehungsweise verfestigt wird. Die Form zur Aufnahme der Hohlfasern ist als Lochplatte ausgebildet, die anschließend mit den darin vergossenen Fasern in ein Gehäuse eingepasst wird. Die Herstellung eines Hohlfasermembranmoduls nach dem Verfahren dieser Druckschrift gestaltet sich jedoch schwierig, da die gesinterten Hohlfasern eine den Keramiken eigene hohe Bruchempfindlichkeit aufweisen. Die Hohlfasern sind schlecht handhabbar, sodass das Einbringen in die Öffnungen der als Lochplatte ausgeführten Form schwierig ist und zu Hohlfaserbrüchen führen kann.

Ein anderes Verfahren zur Herstellung eines Hohlfasermembranmoduls ist aus der EP 0 938 921 A1 bekannt. Bei diesem Verfahren wird ein Bündel Hohlfasern in eine zylindrische Form eingebracht und in dieser Form unter Beaufschlagung des Vergussmaterials mit Ultraschall vergossen. Auch bei diesem Verfahren kann es jedoch sehr leicht zu Hohlfaserbrüchen kommen.

Ein weiteres Verfahren zur Herstellung eines Hohlfaser- oder Kapillarmembranmoduls ist aus der EP 1 370 348 B1 bekannt. Bei diesem Verfahren werden Hohlfasern oder Kapillaren aus einem keramischen oder keramikhaltigen Material in ungesintertem Zustand in eine zur Aufnahme der Hohlfasern oder Kapillaren strukturierte Form eingebracht und in der Form mit einer einschichtigen Vergussmasse vergossen. Die in der Druckschrift beschriebene Vergussmasse verschließt die eingebetteten Hohlfaser- oder Kapillarmembranen jedoch nicht gasdicht. Um die für die Funktion erforderliche Gasdichtigkeit der Pottung bei diesem Verfahren zu erreichen, muss entweder in einem zusätzlichen und aufwendigen Schritt eine zusätzliche Beschichtung aufgebracht werden oder das Modul in eine aufwendige Vorrichtung mit Dichtungselementen integriert werden.

WO 03/051495 A1 offenbart Verfahren zur Herstellung eines Hohlfasermembranmoduls. Diese Verfahren sind jedoch aufwändig.

JP 2003 019422 A offenbart die Verwendung einer Pottung mit mehreren unterschiedlichen Schichten.

Der vorliegenden Erfindung liegt daher das technische Problem zugrunde, auf einfache Weise Module aus keramischen Hohlfaser-oder Kapillarmembranen bereitzustellen, die in erhöhtem Maße temperaturbelastbar, gut handhabbar, mechanisch stabil und/oder gasdicht sind.

Dieses technische Problem wird mit einem Modul, einem Verfahren zur Herstellung eines solchen Moduls und durch eine Vorrichtung gemäß den Patentansprüchen gelöst. Mit dem vorgeschlagenen Modul-Aufbau und dem vorgeschlagenen Verfahren lässt sich die Herstellung von besonders gasdichten und mechanisch stabilen Hohlfaser- und Kapillarmembranmodulen deutlich vereinfachen.

Die vorliegende Erfindung löst das ihr zugrundeliegende technische Problem insbesondere durch die Bereitstellung eines Moduls umfassend a) einen Formkörper, b) mindestens eine darin eingebrachte Hohlfaser- oder Kapillarmembran, wobei diese erfindungsgemäß aus keramischen oder keramikhaltigen Material gebildet ist, sowie c) mindestens eine als gasdichte Verbindung zwischen dem Formkörper und der mindestens einen Hohlfaser- oder Kapillarmembran ausgeformte Pottung, wobei die Pottung mindestens drei Schichten aus mindestens zwei unterschiedlichen Vergussmassen umfasst gemäß Patentanspruch 1. Weiterhin löst die Erfindung das ihr zugrundeliegende technische Problem durch ein Verfahren zur Herstellung eines solchen Moduls gemäß Patentanspruch 12.

Ein erfindungsgemäßes Hohlfaser- oder Kapillarmembranmodul beziehungsweise eine erfindungsgemäße Vorrichtung mit einem derartigen Modul lässt sich in vielen technischen Anwendungsgebieten einsetzen. Beispiele hierfür sind die Trocknung oder Befeuchtung von Luft (Klimatechnik), die Katalyse, die Reinigung von heißen Gasen, die Gastrennung, die Pervaporation, die Dampfpermeation, die heterogene Katalyse, ein Einsatz in Membranreaktoren, in Wärmetauschern, in Kontaktoren, in Brennstoffzellen, als Vorfilter zur Klärung, die Filtration aggressiver Medien wie heißen Säuren und Laugen oder Lösungsmitteln, die Filtration abrasiver, giftiger, mikrobiologisch oder anderweitig belasteter Flüssigkeiten sowie die Aufarbeitung von Emulsionen.

Im Zusammenhang mit dieser Erfindung wird unter dem Begriff "Hohlfasermembran" ein rohrförmiger Membrankörper mit Außendurchmessern im Bereich von etwa 10 µm bis 0,50 mm verstanden.

Im Zusammenhang mit dieser Erfindung wird unter dem Begriff "Kapillarmembran" ein rohrförmiger Membrankörper mit Außendurchmessern von etwa 0,51 mm bis 3 mm verstanden.

Es sei jedoch angemerkt, dass für spezielle Anwendungen Membranen mit anderen Außendurchmessern in ein Modul integriert werden können. Hohlfaser- und Kapillarmembranen können jede diesbezüglich aus dem Stand der Technik bekannte Form haben.

Im Zusammenhang mit dieser Erfindung werden unter "keramischen Hohlfaser- oder Kapillarmembranen" Hohlfaser- oder Kapillarmembranen verstanden, die aus mindestens einem keramischen oder keramikhaltigen Material bestehen, im Wesentlichen bestehen oder dieses enthalten. Die mindestens eine Hohlfaser oder Kapillarmembran kann in bekannter Weise als Grünfaser beziehungsweise im Grünzustand bereitgestellt werden. Sie kann über Spinnen beziehungsweise Extrusion von anorganischen oder metallorganischen Massen, wie Polymervorstufen oder anorganischen binderhaltigen Suspensionen, von wässrigen Lösungen, von Salzen oder von mit Pulver gefüllten Sol/Gelen erhalten werden. Eine derartig hergestellte Hohlfaser- oder Kapillarmembran ist im Grünzustand flexibel und gut handhabbar. Die mindestens eine Hohlfaser- oder Kapillarmembran wird erfindungsgemäß bevorzugt im gesinterten beziehungsweise pyrolisierten Zustand eingesetzt. Der keramische Brand, auch Sintern genannt, hat einen entscheidenden Einfluss auf die Eigenschaft der erhaltenen keramischen Hohlfasern oder Kapillaren. Eine gute Versinterung erzielt eine gute mechanische Belastbarkeit bei gleichzeitigem Erhalt der offenen Porosität. Im gesinterten Zustand besteht die mindestens eine Hohlfaser- oder Kapillarmembran aus Materialien, besteht im Wesentlichen aus diesen oder enthält diese, wobei die Materialien ausgewählt sind aus der Gruppe bestehend aus oxidischen Materialien wie ZrO₂, TiO₂, α-Al₂O₃, y-Al₂O₃, 3Al₂O₃•2SiO₂ (Mullit), MgAl₂O₄ (Spinell), SiO₂, aus Perowskiten, Hydroxylapatit, Zeolithen, nichtoxidischen Materialien wie SiBNC, SiC, BN, Si₃N₄, C, sowie aus Metallen wie Kupfer, Titan, Eisen, speziellen Edelstählen oder Übergangsmetalllegierungen, und aus Kombinationen davon. Diese Aufzählung ist selbstverständlich nicht abschließend. Dem Fachmann sind geeignete Materialien zur Herstellung keramischer Hohlfasern oder Kapillaren bekannt. Die Keramik kann auch mit Keramik, zum Beispiel Spinell-Nanopartikeln zur Einstellung der Porengröße, oder mit Metallen, zum Beispiel Pd-Legierungen, beschichtet sein. Die Hohlfasern können porös oder dicht sein.

Die mindestens eine keramische Hohlfaser- oder Kapillarmembran kann entweder im ungesinterten oder im bereits gesinterten Zustand in den Formkörper eingebracht sein. In bevorzugter Ausführungsform wird die mindestens eine keramische Hohlfaser- oder Kapillarmembran in gesintertem Zustand in den Formkörper eingebracht. Die Anzahl der in den Formkörper eingebrachten keramischen Hohlfaser- oder Kapillarmembranen kann erfindungsgemäß eine, mehrere, beispielsweise 2 bis 10, einige, beispielsweise 11 bis 999, oder viele, beispielsweise 1000 bis 100.000, sein.

Die mindestens eine keramische Hohlfaser- oder Kapillarmembran ist erfindungsgemäß bevorzugt porös, insbesondere mikro- oder nanoporös, sie kann aber auch gasundurchlässig sein.

Im Zusammenhang mit dieser Erfindung wird unter "Formkörper" eine strukturierte geschlossene, halb-geschlossene oder offene Form verstanden. Beispielhafte Ausgestaltungsvarianten dieser Form sind zylinderförmige, ovale, kastenartige, gerillte oder gewellte Körper oder sternförmig ausgestaltete Körper, die aufgrund ihrer Geometrie Ausnehmungen zur Aufnahme der Fasern oder Kapillaren aufweisen. Erfindungsgemäß bevorzugt ist der Formkörper zylinderförmig. Erfindungsgemäß kann der Formkörper eine Bohrung aufweisen, durch die Vergussmassen durch einfüllen eingebracht werden können. Der Formkörper dient der Anordnung und Halterung der Membranen in einer Vorrichtung, zum Beispiel Filtervorrichtung, insbesondere in einem Modul, zum Beispiel Filtermodul und positioniert diese Membranen derart, dass sie bestimmungsgemäß funktionieren können, insbesondere dient er auch als Anschlusselement für die Zu-und Ableitung von Fluiden beziehungsweise Gasen. Der Formkörper kann beispielsweise aus einer porösen, abgedichteten oder dichten Keramik oder anderen anorganischen Materialien, wie beispielsweise Metall oder Glas bestehen. Vorzugsweise weist der aufnehmende Formkörper einen gleichen oder ähnlichen thermischen Ausdehnungskoeffizienten auf wie die Hohlfasern oder Kapillaren und das Vergussmaterial. Auf diese Weise werden Spannungen bei der Herstellung sowie bei einem späteren Einsatz des Moduls unter hohen Temperaturen vermieden. Der Formkörper ist Bestandteil des späteren Hohlfaser- oder Kapillarmembranmoduls und derart ausgeformt, dass die Hohlfasern beziehungsweise Kapillaren darin aufgenommen werden können. Das Ablegen der Hohlfasern beziehungsweise Kapillaren in dem Formkörper kann manuell oder maschinell erfolgen.

Im Zusammenhang mit dieser Erfindung wird unter dem Begriff "Modul" ein Bauteil verstanden, das aus mindestens einer keramischen Hohlfaser- oder Kapillarmembran, mindestens einer Einbettung beziehungsweise Pottung und einem Formkörper besteht.

Im Zusammenhang mit der vorliegenden Erfindung wird unter einer "Pottung" ein in einen Formkörper eingebrachtes der Fixierung einer Membran in dem Formkörper dienendes Verbindungsmaterial im Verbindungsbereich von Membran und Formkörper verstanden.

Im Zusammenhang mit der Erfindung wird unter dem Begriff "Pottung" insbesondere eine aus Vergussmasse bestehende Einbettung beziehungsweise Fixierung mindestens eines Längenabschnitts mindestens einer Hohlfaser- oder Kapillarmembran in einem Formkörper verstanden.

Die Vergussmasse, auch als Pottungsmasse bezeichnet, ist das Verbindungsmaterial selbst. Die Vergussmasse kann erfindungsgemäß eine Suspension, vor allem eine wässrige Suspension, sein, die dem Fachmann als Schlicker bekannt ist. Nach Einbringen und Ausformen der Vergussmasse in den die Membran enthaltenden Formkörper wird diese anschließend ausgehärtet beziehungsweise verfestigt, sodass ein Hohlfaser- beziehungsweise Kapillarmembranmodul bereitgestellt wird, das in ein Gehäuse einbringbar und in technischen Anlagen einsetzbar ist. Die Verfestigung der Vergussmasse kann beispielsweise durch einen thermischen Prozessschritt erfolgen. Bei Einsatz eines keramischen Materials als Vergussmasse kann daher die Sinterung der Hohlfasern beziehungsweise Kapillaren und die Verfestigung der Vergussmasse mit dem gleichen thermischen Prozessschritt erfolgen. Diese Technik wird als Cofiring bezeichnet.

Die Vergussmassen können erfindungsgemäß aus verschiedenen Materialien bestehen. Dabei weisen die verwendeten Materialien in bevorzugter Ausführungsform einen Ausdehnungskoeffizienten auf, der dem der keramischen Hohlfaser- oder Kapillarmembranen ähnlich oder gleich ist. Vorzugsweise ist der Unterschied der Ausdehnungskoeffizienten nicht größer als 5 x 10⁻⁶ K⁻¹, bevorzugt nicht größer als 1 x 10⁻⁶ K⁻¹, wobei ein höherer thermischer Ausdehnungskoeffizient des Faser- oder Kapillarmaterials leichter toleriert werden kann, als der umgekehrte Fall.

Die Ausdehnungskoeffizienten bekannter Materialien für die Vergussmasse beziehungsweise für die Hohlfasern beziehungsweise Kapillaren betragen für Al₂O₃ ca. 8 x 10⁻⁶ K⁻¹ für ZrO₂ (Y₂O₃-stabilisiert) ca. 10 x 10⁻⁶ K⁻¹, für SiO₂ ca. 0,5 x 10⁻⁶ K⁻¹ für TiO₂ ca. 8-10 x 10⁻⁶ K⁻¹ und für SiC ca. 4,5 x 10⁻⁶ K⁻¹. Aus diesen Beispielen ist ersichtlich, dass sich zahlreiche Materialien und Materialkombinationen finden lassen, die der obigen Bedingung eines geringen Unterschiedes im thermischen Ausdehnungskoeffizienten genügen. Weiterhin ist erfindungsgemäß in bevorzugter Ausführung vorgesehen, dass ein Material, das als Vergussmasse verwendet werden soll, im relevanten Temperaturbereich chemisch inert gegenüber den eingebetteten keramischen Hohlfaser- oder Kapillarmembranen ist. Durch diese Eigenschaften der Vergussmasse werden thermische Spannungen im Modul minimiert.

Gemäß der Erfindung besteht die mindestens eine Pottung daher aus mehreren, vorzugsweise drei Schichten mindestens zwei unterschiedlicher Vergussmassen. Erfindungsgemäß bevorzugt ist die mindestens eine Pottung aus zwei Außenschichten und einer dazwischen liegenden Zwischenschicht gebildet.

Bevorzugt besteht mindestens eine der mindestens drei Schichten aus einem Material, das mit dem Material der mindestens einen Hohlfaser- oder Kapillarmembran, bevorzugt also mit einem keramischen oder keramikhaltigen Material, kompatibel ist, beziehungsweise ist aus diesem Material gebildet. Im Zusammenhang mit dieser Erfindung wird unter einem "kompätiblen" Material ein Material verstanden, dessen Eigenschaften sich in Bezug auf Chemie und Ausdehnung den Eigenschaften des Vergleichsmaterials ähneln.

Bevorzugt besteht mindestens eine der mindestens drei Schichten aus dem gleichen keramischen oder keramikhaltigen Material wie die mindestens eine Hohlfaser- oder Kapillarmembran, beziehungsweise ist aus diesem Material gebildet.

Es zeigte sich überraschenderweise, dass es genügt, eine Schicht einer bestimmten Zusammensetzung, zum Beispiel eine Glasschicht, mit zwei weiteren Schichten mindestens einer anderen Vergussmasse zu kombinieren, insbesondere zwischen zwei keramische Schichten einzuschließen, um eine gasdichte Pottung zu erhalten. Der Aufbau der Pottung in mindestens drei Schichten ermöglicht das gleichzeitige Sintern von zwei oder mehreren Pottungen, die erfindungemäß bevorzugt in einem erfindungsgemäßen Modul enthalten sind. Der Aufbau der Pottung in mindestens drei Schichten verhindert auch, dass die Vergussmasse der Zwischenschicht, erfindungsgemäß bevorzugt Glas oder Metall, durch Kapillarkräfte die zu versiegelnde Außenschicht nicht genügend infiltriert.

Erfindungsgemäß besonders bevorzugt wird neben zwei oder mehreren keramischen Schichten eine Schicht aus vorzugsweise Glas oder Metall als Zwischenschicht eingefügt. Erfindungsgemäß bevorzugt weist diese Metall- oder Glasschicht einen Metall- beziehungsweise Glaserweichungspunkt deutlich unter der Sintertemperatur der verwendeten Keramik und deutlich über der späteren Betriebstemperatur auf. Darüber hinaus ist erfindungsgemäß bevorzugt, dass das verwendete Glas oder Metall die Verschlussmasse aus Keramik gut benetzt und die Viskosität des Glases oder Metalls bei einer Sinterung den Verschluss kleiner Poren und größerer Risse erlaubt.

Die Erfindung betrifft daher ein Modul, umfassend a) einen Formkörper, b) mindestens eine, vorzugsweise mehrere oder viele darin eingebrachte, vorzugsweise parallel zueinander oder in verdrillter oder geflochtener Form vorliegende Hohlfaser- oder Kapillarmembran(en), sowie c) mindestens eine als gasdichte Verbindung zwischen dem Formkörper und der mindestens einen Hohlfaser- oder Kapillarmembran ausgeformte Pottung, wobei die Pottung mindestens drei Schichten aus mindestens zwei unterschiedlichen Vergussmassen umfasst gemäß Anspruch 1. In bevorzugter Ausführungsform ist vorgesehen, dass eine, bevorzugt beide Stirnseiten der mindestens einen

Hohlfaser- oder Kapillarmembran an einen Formkörper, der Zu- und Ableitungen von Fluiden beziehungsweise Gasen bereitstellt, angeschlossen ist, insbesondere durch Sintern der Pottungsmasse verbunden ist.

Es wird also erfindungsgemäß ein Modul bereitgestellt, umfassend mindestens eine Hohlfaser- oder Kapillarmembran, wobei die mindestens eine Hohlfaser- oder Kapillarmembran aus einem keramischen oder keramikhaltigen Material besteht, im Wesentlichen besteht oder dieses enthält, weiterhin umfassend einen Formkörper, wobei die mindestens eine Hohlfaser- oder Kapillarmembran, in den Formkörper eingebracht beziehungsweise angeschlossen ist, weiterhin umfassend mindestens eine Pottung, wobei die mindestens eine Pottung mindestens drei Schichten umfasst und wobei die Schichtenfolge aus mindestens zwei Vergussmassen unterschiedlicher Zusammensetzungen aufgebaut sind. In bevorzugter Ausführungsform ist die mindestens eine Pottung derart angeordnet, dass sie die mindestens eine Hohlfaser- oder Kapillarmembran über einen definierten Längenbereich vollständig umgibt, und dass sie über diesen Längenbereich den Raum zwischen der mindestens einen Hohlfaser- oder Kapillarmembran und dem Formkörper ausfüllt und damit die Membran in den Formkörper einbettet, so dass die mindestens eine Hohlfaser- oder Kapillarmembran mit dem Formkörper gasdicht angeschlossen beziehungsweise verbunden ist und so dass durch die mindestens eine Pottung ein von der Pottung nicht erfasster Längenbereich der mindestens einen Hohlfaser- oder Kapillarmembran räumlich von den Lumina der mindestens einen Hohlfaser- oder Kapillarmembran, die bevorzugt offen sind, gasdicht getrennt ist.

In einer weiteren erfindungsgemäß bevorzugten Ausführungsform umfasst die Pottung mehrere Schichten verschiedener Pottungsmassen. Besonders bevorzugt umfasst die mindestens eine Pottung zwei Außenschichten und eine dazwischen liegende Zwischenschicht. Erfindungsgemäß kann die mindestens eine Pottung drei Schichten aus insgesamt drei unterschiedlichen Vergussmassen umfassen. In einer bevorzugten Ausführungsform der Erfindung umfasst die mindestens eine Pottung drei Schichten aus insgesamt zwei unterschiedlichen Vergussmassen, wobei die beiden äußeren Schichten aus der gleichen Vergussmasse gebildet sind. In einer weiteren erfindungsgemäß bevorzugten Ausführungsform umfasst die Pottung zwei keramische oder keramikhaltige Außenschichten und mindestens eine Zwischenschicht. In einer erfindungsgemäß besonders bevorzugten Ausführungsform werden zwei verschiedene Vergussmassen oder Pottungsmassen benutzt, wobei die eine aus keramischen oder keramikhaltigen Material und die andere Glas oder Metall gebildet ist. Besonders bevorzugt sind dabei die beiden Außenschichten aus einem keramischen oder keramikhaltigen Material und die Zwischenschicht aus Glas oder Metall gebildet.

Der Materialerweichungspunkt des für die Zwischenschicht verwendeten Glases oder Metalls liegt erfindungsgemäß unter der Sintertemperatur des keramischen oder keramikhaltigen Materials der beiden äußeren Schichten und über der Betriebstemperatur des Moduls. In einer erfindungsgemäß bevorzugten Ausführungsform benetzt das für die Zwischenschicht verwendete Glas oder Metall das keramische oder keramikhaltige Material der mindestens eine der beiden äußeren Schichten gut, das heißt, das keramische oder keramikhaltige Material der mindestens einen äußeren Schicht weist eine hohe Benetzbarkeit für das als Zwischenschicht verwendete Glas oder Metall auf. Erfindungsgemäß bevorzugt ermöglicht die Viskosität des für die Zwischenschicht verwendeten Glases oder Metalls bei einem Schmelzen oder bei einer Sinterung den Verschluss kleiner Poren und Risse in mindestens einer der beiden äußeren Schichten. Erfindungsgemäß bevorzugt ist der Ausdehnungskoeffizient der Vergussmassen der mindestens drei Schichten dem der mindestens einen Hohlfaser- oder Kapillarmembran ähnlich oder gleich. Erfindungsgemäß bevorzugt sind die Vergussmassen der mindestens drei Schichten chemisch inert gegen die mindestens eine Hohlfaser- oder Kapillarmembran. Erfindungsgemäß bevorzugt sind die Vergussmassen der mindestens drei Schichten partikulär.

In einer erfindungsgemäß bevorzugten Ausführungsform ist die mindestens eine Hohlfaser- oder Kapillarmembran an ihren beiden Enden in je eine Pottung eingebracht.

In einer erfindungsgemäß bevorzugten Ausführungsform umfasst ein Modul der vorliegenden Erfindung einen Formkörper, viele keramische Hohlfaser-oder Kapillarmembranen und zwei Pottungen, wobei je eine Pottung an einem der beiden Enden der keramischen Hohlfaser- oder Kapillarmembranen liegt.

Die Erfindung betrifft auch Verfahren zur Herstellung von erfindungsgemäßen Modulen.

Die Erfindung betrifft daher ein Verfahren zur Herstellung eines Moduls, beinhaltend die folgenden Schritte in der angegebenen Reihenfolge: a) Einbringen von mindestens einer Hohlfaser- oder Kapillarmembran in einen Formkörper, b) Einbringen einer ersten Vergussmasse in den Formkörper, c) Formen einer ersten Schicht einer Pottung aus der eingebrachten ersten Vergussmasse, d) Einbringen einer zweiten Vergussmasse in den Formkörper, e) Formen einer zweiten Schicht einer Pottung aus der eingebrachten zweiten Vergussmasse, f) Einbringen einer dritten Vergussmasse in den Formkörper, g) Formen einer dritten Schicht einer Pottung aus der eingebrachten dritten Vergussmasse nach Anspruch 12. Gegebenenfalls können die Schritte f) und g) mit weiteren Vergussmassen zum Einbringen weiterer Schichten ein- oder mehrmals wiederholt werden.

Die mindestens eine Hohlfaser- oder Kapillarmembran kann in einem erfindungsgemäßen Verfahren in ungesintertem Zustand, das heißt als Grünfaser, oder in gesintertem Zustand in einen Formkörper eingebracht werden. In einem erfindungsgemäß bevorzugtem Verfahren wird die mindestens eine Hohlfaser oder Kapillarmembran in gesintertem Zustand in einen Formkörper eingebracht. Dies bedeutet, dass durch das vorherige Sintern die gewünschte Porosität und die Porengröße der mindestens einen Hohlfaser- oder Kapillarmembran gebildet wurde.

Erfindungsgemäß bevorzugt wird mindestens eine zweite Pottung in den Formkörper eingebracht und ausgeformt. Erfindungsgemäß bevorzugt werden alle Pottungen des Moduls nach einem Herstellungsverfahren, das die oben beschriebenen Schritte beinhaltet, eingebracht und geformt.

Die Erfindung sieht in bevorzugter Ausführungsform vor, nach dem Formen der mindestens einen Pottungsschicht diese aushärten zu lassen. Das Aushärten kann entweder für jede Schicht einzeln, direkt nach dem Einbringen der jeweiligen Vergussmasse und vor dem Einbringen der nächsten Vergussmasse erfolgen, oder das Aushärten erfolgt bei allen Schichten gleichzeitig nach dem Einbringen der letzten Vergussmasse. Erfindungsgemäß bevorzugt werden alle eingebrachten Schichten zusammen nach dem Einbringen der letzten Vergussmasse ausgehärtet. Erfindungsgemäß können alle eingebrachten Pottungen zusammen oder nacheinander ausgehärtet werden.

Erfindungsgemäß kann eine Schicht, bevorzugt die erste beziehungsweise äußerste Schicht der mindestens einen Pottung an eine Verödung angefügt werden. Erfindungsgemäß kann auch die Vergussmasse der ersten Schicht, das heißt der äußersten Schicht, der mindestens einen Pottung als Verödung eingebracht werden. Erfindungsgemäß ist das Material der Verödung ausgewählt aus keramischen Materialien, keramikhaltigen Materialien, Wachsen, Polymeren, Klebstoffen und Kombinationen davon.

Die erfindungsgemäß eingesetzten Hohlfaser- beziehungsweise Kapillarenden können daher offen oder durch eine Verödung verschlossen sein. Im Falle einer Verödung können, nachdem die Pottungsmasse eingebracht, ausgeformt und ausgehärtet ist, die Hohlfaser- beziehungsweise Kapillarenden mit der Verödung abgeschnit ten werden, sodass die Lumina der Fasern oder Kapillaren offen sind. Das Abschneiden der Kapillar- oder Faserenden mit der Verödung kann mit einer geeigneten Trennmethode, beispielsweise mit einer Diamantdrahtsäge, mittels Wasserstrahltechnik oder mittels Laserschneidetechnik erfolgen. Erfindungsgemäß bevorzugt wird nach Einbringen, Ausformen und Aushärten mindestens einer Schicht, in bevorzugter Ausführung aller Schichten der mindestens einen Pottung die keramische Verödung entfernt. Eine Verödung aus organischen Materialien kann während des Sinterprozesses herausgebrannt werden.

Für die Verfahren zur Herstellung der Pottung, das heißt insbesondere das Einbringen und Formen der Pottungen, stehen unterschiedliche dem Fachmann bekannte Techniken, wie beispielsweise Schleudertechnik oder Eingießen zur Verfügung. Dabei werden die Vergussmassen, erfindungsgemäß bevorzugt keramische oder gläserne Vergussmassen, als Schlicker, erfindungsgemäß bevorzugt als wässrige Schlicker, eingebracht. Erfindungsgemäß bevorzugt werden erfindungsgemäß verwendete Schlicker durch dispergieren von partikulären Pottungsmaterialien in einer Flüssigkeit, bevorzugt Wasser, hergestellt beziehungsweise gebildet. Nach dem Einbringen der mindestens einen Pottungsschicht wird die flüssige Phase abgetrennt. Die flüssige Phase kann beispielsweise durch Zentrifugation, durch Anlegen eines Drucks auf der Innenseite oder durch Anlegen eines Vakuums auf der Außenseite abgetrennt werden.

In einem erfindungsgemäß bevorzugten Verfahren werden die mindestens drei Schichten der mindestens einen Pottung nacheinander durch ein Schleuderverfahren geformt.

Erfindungsgemäß bevorzugt ist bei diesem Verfahren die erste und die dritte Vergussmasse aus einem keramischen oder keramikhaltigen Material und die zweite Vergussmasse aus Glas oder Metall gebildet. Erfindungsgemäß kann eine Vergussmasse aus keramischen oder keramikhaltigen Material auch geringe Mengen, das heißt bis zu 20 Gew. %, Glas und/oder Metall enthalten. Erfindungsgemäß kann eine Vergussmasse aus Glas oder Metall auch geringe Mengen, das heißt bis zu 20 Gew. %, keramisches oder keramikhaltiges Material enthalten.

Die mindestens drei Schichten der mindestens einen Pottung können in bevorzugter Ausführungsform nach dem Formen und nach dem Aushärten einer, zweier oder mehrerer, bevorzugt aller Schichten gesintert werden. Erfindungsgemäß bevorzugt wird das Modul in einem Schritt gesintert. Natürlich kann die Sinterung auch in zwei oder mehreren Schritten erfolgen.

Erfindungsgemäß schmilzt durch das Sintern die Vergussmasse, erfindungsgemäß bevorzugt Glas oder Metall, der zweiten Schicht, also der Zwischenschicht, der mindestens einen Pottung ganz oder teilweise.

Die Sintertemperatur kann erfindungsgemäß bevorzugt dem Materialerweichungspunkt des für die Zwischenschicht verwendeten Materials, bevorzugt Glas oder Metall, entsprechen oder mit diesen gleich sein. Auch kann die Sintertemperatur erfindungsgemäß bevorzugt über dem Materialerweichungspunkt des für die Zwischenschicht verwendeten Materials, bevorzugt Glas oder Metall, und unter der Sintertemperatur des keramischen oder keramikhaltigen Materials der mindestens eine Hohlfaser- oder Kapillarmembran liegen. Die Sintertemperatur kann erfindungsgemäß auch der Sintertemperatur des keramischen oder keramikhaltigen Materials der mindestens einen Hohlfaser- oder Kapillarmembran entsprechen oder mit dieser identisch sein. Erfindungsgemäß beträgt die Sintertemperatur von 700°C bis 1500°C, bevorzugt von 1000°C bis 1300°C, besonders bevorzugt 1050°C bis 1200°C.

Erfindungsgemäß wird das Modul stehend gesintert. Im Zusammenhang mit dieser Erfindung wird unter einem "stehenden" Modul ein Modul verstanden, in dem die mindestens eine eingebrachte Hohlfaser- oder Kapillarmembran der Länge nach parallel zu einer Schwerkraft oder einer Zentrifugalkraft verläuft. Erfindungsgemäß bevorzugt ist die Schwerkraft die Gravitation der Erde. Umfasst ein erfindungsgemäßes Modul besonders erfindungsgemäß mindestens eine Hohlfaser- oder Kapillarmembran, einen Formkörper und zwei erfindungsgemäße Pottungen, so ist bei einem solchen Modul, wenn es steht, eine der beiden erfindungsgemäßen Pottungen am oberen Endbereich des Formkörpers, die andere der beiden erfindungsgemäßen Pottungen am unteren Endbereich des Formkörpers gebildet.

Durch den beschriebenen Schichtaufbau einer erfindungsgemäßen Pottung infiltriert beim Sintern geschmolzene Vergussmasse der Zwischenschicht teilweise die darunter liegende keramische Schicht, das heißt es bildet sich zwischen der Glas- oder Metallschicht und der darunter liegenden keramischen Schicht eine Verbindung aus, die die Pottung erfindungsgemäß gasdicht versiegelt.

Erfindungsgemäß bevorzugt ist ein Verfahren, wobei durch die beim Sintern herbeigeführte Verdichtung des für die Zwischenschicht der mindestens einen Pottung verwendeten Glases oder Metalls ein Hohlraum zwischen der Zwischenschicht und einer Schicht, bevorzugt einer Außenschicht; der mindestens einen Pottung gebildet wird. Bei dem erfindungsgemäßen Verfahren ist erfindungsgemäß bevorzugt, dass durch das Sintern und die einwirkende Schwerkraft ein Teil des für die Zwischenschicht der mindestens einen Pottung verwendeten Glases oder Metalls die Poren eines Teils des keramischen oder keramikhaltigen Materials einer Schicht, bevorzugt einer Außenschicht, der mindestens einen Pottung infiltriert und so eine Schicht gemischter Zusammensetzung bildet. In dem Maß wie sich Anteile der Glas- oder Metallschicht während des Sinterns in Bereiche insbesondere darunter gelegener Schichten anderer Zusammensetzungen bewegen und so die genannte Schicht gemischter Zusammensetzung bilden, entsteht im Bereich, aus dem das Glas oder Metall abwandert, der genannte Hohlraum.

Die Erfindung umfasst weiterhin erfindungsgemäße Module, die mittels eines der erfindungsgemäßen Verfahren erhältlich sind.

Auch umfasst die Erfindung Vorrichtungen, die mindestens ein erfindungsgemäßes Modul sowie ein Gehäuse enthalten. In einer erfindungsgemäß bevorzugten Ausführungsform ist das Gehäuse als metallische Kartusche ausgebildet. Bevorzugt sind dabei Formkörper und Kartusche zwischen Lumenseite und Außenseite der Hohlfasern oder Kapillaren stopfbuchsenartig abgedichtet. Die Kartusche dient zur Adaptierung der Vorrichtung an ein Gesamtsystem. Besonders bevorzugt sind bei der erfindungsgemäßen Vorrichtung der Formkörper und das Gehäuse zylinderförmig ausgebildet.

Vorteilhafte Ausgestaltungen sind Gegenstand der Unteransprüche. Die Erfindung wird anhand der folgenden Beispiele und der dazugehörigen Figur näher erläutert.

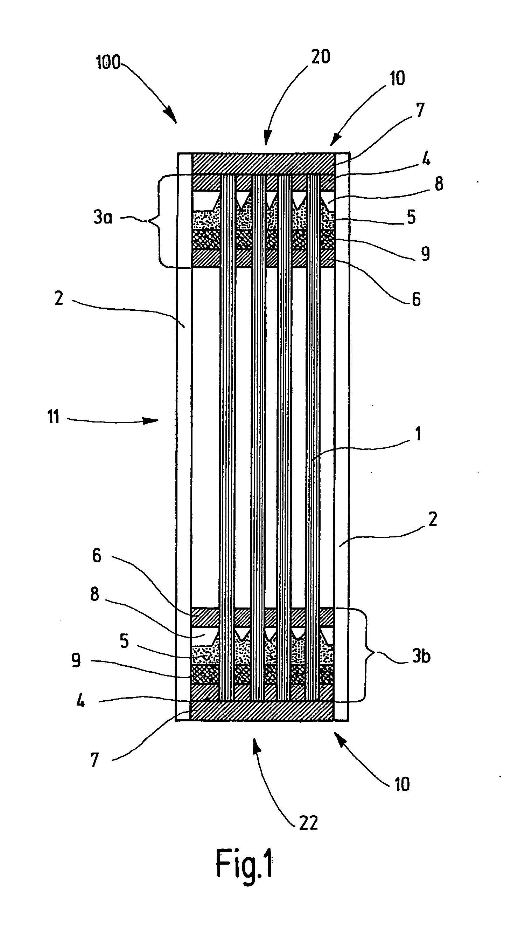

Die Figur zeigt eine Längsschnitt auf ein erfindungsgemäßes Modul.

### Beispiel

### Modulbau

Als Hohlfaser- oder Kapillarmembranen (1) werden porös gesinterte Al₂O₃-Kapillarenmembranen mit einem Außendurchmesser von 1,6 mm und einer Länge von 25 cm eingesetzt. Als Formkörper (2) dient ein gasdichtes Keramikrohr aus Al₂O₃ mit einem variablen Durchmesser und einer Länge von 25 cm. Die keramische Vergussmasse für die Außenschichten I (4) und die Außenschichten II (6) ist ein Schlicker aus 80 % Al₂O₃-Pulver und 20 % Wasser. Das Al₂O₃-Pulver hat eine durchschnittliche Partikelgröße von 0,5 µm. Die Vergussmasse für die Zwischenschicht (5) ist 50 % Borosilikatglas und 50 % Wasser. Das Borosilikatglas hat eine durchschnittliche Partikelgröße von 5 µm.

Die keramischen Kapillarmembranen (1) werden in das als Formkörper (2) dienende Rohr eingefüllt. Der Füllgrad liegt im Bereich von 80 % der Maximalfüllung des Formkörpers (2). Das als Formkörper (2) dienende Rohr wird beidseitig mit einem Flies verschlossen. Anschließend wird durch eine Bohrung an der Seite des als Formkörper (2) dienenden Rohres keramische Vergussmasse während eines Schleudervorgangs in einer Zentrifuge durch einfüllen eingebracht. Die eingebrachte Vergussmasse bildet die am Modulende (10) liegende Verödungsschicht (7). In gleicher Weise werden nacheinander die verschiedenen Vergussmassen, die die verschiedenen Schichten (4), (5), (6) der ersten Pottung (3a) bilden, eingebracht. Das heißt, der die Verödungsschicht (7) bildenden keramischen Vergussmasse folgt eine zweite keramische Vergussmasse, die die Außenschicht I (4) bildet. Danach folgt das Einbringen der Glasvergussmasse, die die Zwischenschicht (5) bildet. Danach wird wiederum eine keramische Vergussmasse eingebracht, die die Außenschicht II (6) bildet. Anschließend werden in gleicher Weise die Vergussmassen, die die zweite Pottung (3b) bilden, eingebracht. Jede Schicht der beiden Pottungen (3a) und (3b) hat eine Mindestdicke von 1 cm.

Das Modul (100) wird zwei Stunden bei 1175°C stehend gesintert. Die Verödungsschichten werden dann durch eine Diamantsäge entfernt.

### Figur 1

Die Figur zeigt eine erfindungsgemäß bevorzugte Ausführungsform eines Moduls (100). Dargestellt ist ein Modul (100), umfassend einen Formkörper (2) sowie darin eingebrachte keramische oder keramikhaltige Hohlfasern (1) sowie zwei Pottungen (3a), (3b). Der Formkörper (2) ist im Längsschnitt gesehen rechteckig ausgebildet, stellt jedoch einen rohrförmigen Behälter mit in Längsrichtung gesehen durchgängigem Hohlraum dar. In diesem als Hohlkörper ausgebildeten Formkörper (2) sind parallel zur Längsrichtung des Formkörpers (2) Hohlfasern (1) über nahezu die gesamte Länge des Formkörpers (2) angeordnet. Die in Längsrichtung im Formkörper (2) angeordneten Hohlfasern sind an den beiden Endbereichen (20),(22) des Formkörpers jeweils in Pottungen (3) über einen definierten peripheren Längsabschnitt der Hohlfaser eingebettet und so in dem Formkörper (2) fixiert. Die Pottung (3) stellt einen gasdichten Abschluss des Lumeninneren des die Hohlfasern enthaltenen Formkörpers zu dem Äußeren des Formkörpers dar. Der Figur kann entnommen werden, dass die Pottung (3) aus mehreren Schichten unterschiedlicher Zusammensetzung aufgebaut ist. Die Pottung (3) weist eine Außenschicht I (4) aus einem keramischen Material, eine darunter, das heißt in Richtung des Inneren des Formkörpers gelegene Zwischenschicht (5) aus Glas oder Metall und eine zweite Außenschicht II (6), die am weitesten von dem nächstgelegenen Ende des Formkörpers (2) entfernt ist, auf. Die Außenschicht II (6) ist ebenfalls aus einem keramischen Material, insbesondere dem gleichen keramischen Material wie die Außenschicht I (4) aufgebaut. Das Modul des Beispiels wurde im Stehen gesintert. Aus diesem Grund ergibt sich folgende Schichtenfolge. Die in der oberen Pottung (3a) unten liegende Außenschicht II (6) wurde teilweise von geschmolzenem Glas oder Metall der Zwischenschicht (5) infiltriert und bildet demgemäß nach oben, dass heißt der Schwerkraft entgegen beziehungsweise in Richtung des nächstgelegenen Endbereichs (20) des Formkörpers (2) eine infiltrierte Schicht (9) zwischen der Außenschicht II (6) und der Zwischenschicht (5) aus. Das infiltrierte Glas oder Metall hinterlässt ebenfalls der Schwerkraft entgegen beziehungsweise in Richtung des nächstgelegenen Endbereichs (20) des Formkörpers (2) einen Hohlraum (8). Dieser liegt zwischen der Außenschicht I (4) und der Zwischenschicht (5). In der unteren Pottung (3b) wurde die Außenschicht I (4) von Glas oder Metall aus der Zwischenschicht (5) teilweise infiltriert und bildet demgemäss ebenfalls nach oben eine infiltrierte Schicht (9), in diesem Fall zwischen der Außenschicht I (4) und der Zwischenschicht (5), aus. Auch hier hinterlässt das infiltrierte Glas oder Metall ebenfalls der Schwerkraft entgegen beziehungsweise entgegen der Richtung des nächstgelegenen Endbereichs (22) des Formkörpers (2) einen Hohlraum (8). Der durch die Infiltration gebildete Hohlraum (8) liegt in der unteren Pottung (3b) zwischen der Außenschicht II (6) und der Zwischenschicht (5).

Dabei ist:
(1) Hohlfaser- oder Kapillarmembran
(2) Formkörper
(3) Pottung
(3a) obere Pottung
(3b) untere Pottung
(4) Außenschicht I
(5) Zwischenschicht
(6) Außenschicht II
(7) Verödung
(8) Hohlraum
(9) Infiltrierte Schicht
(10) Modulende
(11) Modulinnere
(20) oberer Endbereich des Formkörpers
(22) unterer Endbereich des Formkörpers
(100) Modul

## Patentansprüche

1. Modul, umfassend
a) einen Formkörper (2),
b) mindestens eine darin eingebrachte aus keramischem oder keramikhaltigem Material gebildete Hohlfaser- oder Kapillarmembran (1), sowie
c) mindestens eine als gasdichte Verbindung zwischen dem Formkörper (2) und der mindestens einen Hohlfaser- oder Kapillarmembran (1) ausgeformte Pottung (3),
**dadurch gekennzeichnet, dass** die Pottung (3) mindestens drei Schichten (4), (5), (6) aus mindestens zwei unterschiedlichen Vergussmassen umfasst, wobei die beiden Außenschichten aus keramischem oder keramikhaltigem Material und die Zwischenschicht aus Glas oder Metall gebildet sind, wobei der Materialerweichungspunkt des für die Zwischenschicht (5) verwendeten Glases oder Metalls unter der Sintertemperatur des keramischen oder keramikhaltigen Materials der beiden äußeren Schichten (4), (6) und über der Betriebstemperatur des Moduls liegt.

2. Modul nach Anspruch 1, wobei mindestens eine der mindestens drei Schichten (4), (5), (6) aus einem Material gebildet ist, das mit dem Material der mindestens einen Hohlfaser- oder Kapillarmembran (1) kompatibel ist.

3. Modul nach Anspruch 1, wobei mindestens eine der mindestens drei Schichten (4), (5), (6) aus dem gleichen keramischen oder keramikhaltigen Material gebildet ist wie die mindestens eine Hohlfaser- oder Kapillarmembran (1).

4. Modul nach einem der vorhergehenden Ansprüche, wobei die mindestens eine Pottung (3) aus zwei Außenschichten (4), (6) und eine dazwischen liegende Zwischenschicht (5) gebildet ist.

5. Modul nach einem der vorhergehenden Ansprüche, wobei die mindestens eine Pottung (3) drei Schichten (4), (5), (6) aus insgesamt drei unterschiedlichen Vergussmassen umfasst.

6. Modul nach einem der Ansprüche 1 bis 4, wobei die mindestens eine Pottung (3) drei Schichten (4), (5), (6) aus insgesamt zwei unterschiedlichen Vergussmassen umfasst, wobei die beiden äußeren Schichten (4), (6) aus der gleichen Vergussmasse gebildet sind.

7. Modul nach einem der vorhergehenden Ansprüche, wobei das keramische oder keramikhaltige Material der beiden äußeren Schichten (4), (6) eine hohe Benetzbarkeit für das für die Zwischenschicht (5) verwendete Glas oder Metall aufweist.

8. Modul nach einem der vorhergehenden Ansprüche, wobei die Viskosität des für die Zwischenschicht (5) verwendeten Glases oder Metalls bei einer Sinterung den Verschluss kleiner Poren und Risse in einer der beiden äußeren Schichten (4 oder 6) ermöglicht.

9. Modul nach einem der vorhergehenden Ansprüche, wobei die Ausdehnungskoeffizienen der Vergussmassen der mindestens drei Schichten (4), (5), (6) und der mindestens einen Hohlfaser- oder Kapillarmembran (1) einen Unterschied von nicht größer als 5 x 10⁻⁶ K⁻¹ haben oder gleich sind.

10. Modul nach einem der vorhergehenden Ansprüche, wobei die Vergussmassen der mindestens drei Schichten (4), (5), (6) chemisch inert gegen die mindestens eine Hohlfaser- oder Kapillarmembran (1) sind.

11. Modul nach einem der vorhergehenden Ansprüche, wobei die mindestens eine Hohlfaser- oder Kapillarmembran (1) an ihren beiden Enden in je eine Pottung (3) eingebracht ist.

12. Verfahren zur Herstellung eines Moduls, insbesondere nach einem der Ansprüche 1 bis 11, beinhaltend die folgenden Schritte in der angegebenen Reihenfolge
a) Einbringen von mindestens einer aus keramischem oder keramikhaltigem Material gebildeten Hohlfaser- oder Kapillarmembran (1) in einen Formkörper (2),
b) Einbringen einer ersten Vergussmasse in den Formkörper (2),
c) Formen einer ersten Schicht (4) einer Pottung (3) aus der eingebrachten ersten Vergussmasse,
d) Einbringen einer zweiten Vergussmasse in den Formkörper (2),
e) Formen einer zweiten (5) Schicht einer Pottung (3) aus der eingebrachten zweiten Vergussmasse,
f) Einbringen einer dritten Vergussmasse in den Formkörper (2) und
g) Formen einer dritten Schicht (6) einer Pottung (3) aus der eingebrachten dritten Vergussmasse,
**dadurch gekennzeichnet, dass** die erste und die dritte Vergussmasse aus keramischem oder keramikhaltigem Material gebildet ist und die zweite Vergussmasse aus Glas oder Metall gebildet ist, wobei der Materialerweichungspunkt des für die zweite Schicht (5) verwendeten Glases oder Metalls unter der Sintertemperatur des keramischen oder keramikhaltigen Materials der ersten und der dritten Schicht (4), (6) und über der Betriebstemperatur des Moduls liegt, und wobei das Modul stehend gesintert wird.

13. Verfahren nach Anspruch 12, wobei mindestens eine zweite Pottung (3) in den Formkörper (2) eingebracht und geformt wird.

14. Verfahren nach einem der Ansprüche 12 oder 13, wobei die geformten Schichten (4), (5), (6) der mindestens einen Pottung (3) ausgehärtet werden.

15. Verfahren nach Anspruch 14, wobei eine eingebrachte und ausgeformte Schicht der mindestens einen Pottung (3) vor dem Einbringen einer weiteren Vergussmasse ausgehärtet wird.

16. Verfahren nach Anspruch 14, wobei nach Einbringen und Formen aller Vergussmassen die Schichten der mindestens einen Pottung (3), die durch die Vergussmassen geformt werden, gleichzeitig ausgehärtet werden.

17. Verfahren nach einem der Ansprüche 12 bis 16, wobei die die Vergussmassen bildenden Materialen als Schlicker eingebracht werden.

18. Verfahren nach Anspruch 17, wobei der eingebrachte Schlicker durch dispergieren von partikulärem Pottungsmaterial in einer Flüssigkeit gebildet wird.

19. Verfahren nach einem der Ansprüche 12 bis 18, wobei die erste Schicht (4) der mindestens einen Pottung (3) an eine Verödung (7) angefügt wird.

20. Verfahren nach einem der Ansprüche 12 bis 18, wobei die Vergussmasse der ersten Schicht (4) der mindestens einen Pottung (3) als Verödung (7) eingebracht wird.

21. Verfahren nach einem der Ansprüche 19 oder 20, wobei das Material der Verödung (7) ausgewählt ist aus keramischen Materialien, keramikhaltigen Materialien, Wachsen, Polymeren, Klebstoffen und Kombinationen davon.

22. Verfahren nach einem der Ansprüche 19 bis 21, wobei nach Einbringen und Aushärten mindestens einer Schicht (4), in bevorzugter Ausführung aller Schichten (4), (5), (6) der mindestens einen Pottung (3) die Verödung (7) entfernt wird.

23. Verfahren nach einem der Ansprüche 12 bis 22, wobei die mindestens drei Schichten (4), (5), (6) der mindestens einen Pottung (3) nacheinander durch ein Schleuderverfahren geformt werden.

24. Verfahren nach einem der Ansprüche 12 bis 23, wobei die mindestens eine Hohlfaser- oder Kapillarmembran (1) in ungesintertem Zustand in einen Formkörper (2) eingebracht wird.

25. Verfahren nach einem der Ansprüche 12 bis 23, wobei die mindestens eine Hohlfaser- oder Kapillarmembran (1) in gesintertem Zustand in einen Formkörper (2) eingebracht wird.

26. Verfahren nach einem der Ansprüche 14 bis 25, wobei das Modul nach dem Aushärten aller geformten Schichten in einem Schritt gesintert wird.

27. Verfahren nach einem der Ansprüche 14 bis 25, wobei das Modul nach dem Aushärten aller geformten Schichten in mehreren Schritten gesintert wird.

28. Verfahren nach einem der Ansprüche 26 oder 27, wobei die Sintertemperatur gleich dem Materialeniveichungspunkt des für die Zwischenschicht (5) verwendeten Glases oder Metalls ist.

29. Verfahren nach einem Ansprüche 26 oder 27, wobei die Sintertemperatur über dem Materialerweichungspunkt des für die Zwischenschicht (5) verwendeten Glases oder Metalls und unter der Sintertemperatur des keramischen oder keramikhaltigen Materials der mindestens eine Hohlfaser- oder Kapillarmembran (1) liegt.

30. Verfahren nach einem der Ansprüche 26 oder 27, wobei die Sintertemperatur gleich der Sintertemperatur der mindestens einen Hohlfaser- oder Kapillarmembran (1) ist.

31. Verfahren nach einem der Ansprüche 26 bis 30, wobei durch die beim Sintern herbeigeführte Verdichtung des für die Zwischenschicht (5) verwendeten Glases oder Metalls ein Hohlraum (8) zwischen der Zwischenschicht (5) und einer Außenschicht (4) oder (6) gebildet wird.

32. Verfahren nach einem der Ansprüche 26 bis 31, wobei durch das Sintern ein Teil des für die Zwischenschicht (5) verwendeten Glases oder Metalls die Poren eines Teils des keramischen oder keramikhaltigen Materials einer äußeren Schicht (4) oder (6) infiltriert (9).

33. Modul nach einem der Ansprüche 1 bis 11 erhältlich durch ein Verfahren nach einem der Ansprüche 12 bis 32.

34. Vorrichtung enthaltend ein Modul nach einem der Ansprüche 1 bis 11 und ein Gehäuse.

35. Vorrichtung nach Anspruch 34, wobei das Gehäuse als metallische Kartusche ausgebildet ist.

36. Vorrichtung nach Anspruch 35, wobei der Formkörper und das Gehäuse zylinderförmig ausgebildet sind.

## Claims

1. A module, comprising
a) a mould (2),
b) at least one hollow fibre membrane or capillary membrane (1) made of a ceramic or a material comprising ceramic introduced therein, and
c) at least one potting (3) configured as a gas-tight bond between the mould (2) and the at least one hollow fibre membrane or capillary membrane (1),
**characterized in that** the potting (3) comprises at least three layers (4), (5), (6) made of at least two different potting compounds, wherein the two exterior layers are made of a ceramic or a material comprising ceramic and wherein the intermediate layer (5) is made of glass or metal, wherein the material softening point of the glass or metal used for the intermediate layer (5) is below the sintering temperature of the ceramic or the material comprising ceramic of the two exterior layers (4), (6) and above the operating temperature of the module.

2. A module according to claim 1, wherein at least one of the at least three layers (4), (5), (6) is made of a material that is compatible with the material of the at least one hollow fibre membrane or capillary membrane (1).

3. The module according to claim 1, wherein at least one of the at least three layers (4), (5), (6) is made of the same ceramic or the same material comprising ceramic as the at least one hollow fibre membrane or capillary membrane (1).

4. A module according to any one of the preceding claims, wherein the at least one potting (3) is formed by two exterior layers (4), (6) and an interposed intermediate layer (5).

5. A module according to any one of the preceding claims, wherein the at least one potting (3) comprises three layers (4), (5), (6) made of a total of three different potting compounds.

6. A module according to any one of the claims 1 to 4, wherein the at least one potting (3) comprises three layers (4), (5), (6) made of a total of two different potting compounds, wherein the two exterior layers (4), (6) are made of the same potting compound.

7. A module according to any one of the preceding claims, wherein the ceramic or the material comprising ceramic of the two exterior layers (4), (6) has a high wettability with respect to the glass or metal used for the intermediate layer (5).

8. A module according to any one of the preceding claims, wherein, during a sintering operation, the viscosity of the glass or metal used for the intermediate layer (5) allows for the sealing of small pores and cracks in one of the two exterior layers (4 or 6).

9. A module according to any one of the preceding claims, wherein the expansion coefficients of the potting compounds of the at least three layers (4), (5), (6) and of the at least one hollow fibre membrane or capillary membrane (1) have a difference of not greater than 5 x 10⁻⁶ K⁻¹ or are identical.

10. A module according to any one of the preceding claims, wherein the potting compounds of the at least three layers (4), (5), (6) are chemically inert with respect to the at least one hollow fibre membrane or capillary membrane (1).

11. A module according to any one of the preceding claims, wherein the at least one hollow fibre membrane or capillary membrane (1) is introduced at both ends thereof in one potting (3) each.

12. A method for producing a module, particularly according to any one of the claims 1 to 11, comprising the following steps in the listed sequence:
a) introducing at least one hollow fibre membrane or capillary membrane (1) made of a ceramic or a material comprising ceramic into a mould (2),
b) introducing a first potting compound into the mould (2),
c) shaping a first layer (4) of a potting (3) from the introduced first potting compound,
d) introducing a second potting compound into the mould (2),
e) shaping a second layer (5) of a potting (3) from the introduced second potting compound,
f) introducing a third potting compound into the mould (2), and
g) shaping a third layer (6) of a potting (3) from the introduced third potting compound,
**characterized in that** the first and third potting compounds are made of a ceramic or a material comprising ceramic and that the second potting compound is made of glass or metal, wherein the material softening point of the glass or metal used for the second layer (5) is below the sintering temperature of the ceramic or the material comprising ceramic of the first and third layer (4), (6) and above the operating temperature of the module, and wherein the module is sintered in an upright position.

13. The method according to claim 12, wherein at least one second potting (3) is introduced into the mould (2) and shaped.

14. A method according to any one of the claims 12 or 13, wherein the shaped layers (4), (5), (6) of the at least one potting (3) are hardened.

15. The method according to claim 14, wherein an introduced and shaped layer of the at least one potting (3) is hardened prior to introducing a further potting compound.

16. The method according to claim 14, wherein, after introducing and shaping all potting compounds, the layers of the at least one potting (3), which are formed by the potting compound, are hardened simultaneously.

17. A method according to any one of the claims 12 to 16, wherein the materials forming the potting compound are introduced as slips.

18. The method according to claim 17, wherein the introduced slip is produced by dispersing particulate potting material in a fluid.

19. A method according to any one of the claims 12 to 18, wherein the first layer (4) of the at least one potting (3) is joined to a closure (7).

20. A method according to any one of the claims 12 to 18, wherein the potting compound of the first layer (4) of the at least one potting (3) is introduced as a closure (7).

21. A method according to any one of the claims 19 or 20, wherein the material of the closure (7) is selected from ceramic, materials comprising ceramic, waxes, polymers, adhesives and combinations thereof.

22. A method according to any one of the claims 19 to 21, wherein after introducing and hardening of at least one layer (4), and in a preferred embodiment of all layers (4), (5), (6), of the at least one potting (3) the closure (7) is removed.

23. A method according to any one of the claims 12 to 22, wherein the at least three layers (4), (5), (6) of the at least one potting (3) are shaped successively by means of a centrifugal method.

24. A method according to any one of the claims 12 to 23, wherein the at least one hollow fibre membrane or capillary membrane (1) is introduced into a mould (2) in the unsintered state.

25. A method according to any one of the claims 12 to 23, wherein the at least one hollow fibre membrane or capillary membrane (1) is introduced into a mould (2) in the sintered state.

26. A method according to any one of the claims 14 to 25, wherein the module is sintered in one step after all the shaped layers have been hardened.

27. A method according to any one of the claims 14 to 25, wherein the module is sintered in multiple steps after all the shaped layers have been hardened.

28. A method according to any one of the claims 26 or 27, wherein the sintering temperature is equal to the material softening point of the glass or metal used for the intermediate layer (5).

29. A method according to any one of the claims 26 or 27, wherein the sintering temperature is above the material softening point of the glass or metal used for the intermediate layer (5) and below the sintering temperature of the ceramic or the material comprising ceramic of the at least one hollow fibre membrane or capillary membrane (1).

30. A method according to any one of the claims 26 or 27, wherein the sintering temperature is equal to the sintering temperature of the at least one hollow fibre membrane or capillary membrane (1).

31. A method according to any one of the claims 26 to 30, wherein a hollow space (8) is formed between the intermediate layer (5) and an exterior layer (4) or (6) as a result of compaction of the glass or metal used for the intermediate layer (5) brought about during sintering.

32. A method according to any one of the claims 26 to 31, wherein, as a result of the sintering operation, a portion of the glass or metal used for the intermediate layer is incorporated (9) in the pores of a portion of the ceramic or the material comprising ceramic of an exterior layer (4) or (6).

33. A module according to any one of the claims 1 to 11 obtainable by a method according to any one of the claims 12 to 32.

34. A device comprising a module according to any one of the claims 1 to 11 and a housing.

35. A device according to claim 34, wherein the housing is configured as a metal cartridge.

36. A device according to claim 35, wherein the mould and the housing are configured to be cylindrical.

## Revendications

1. Module comprenant
a) un corps moulé (2),
b) au moins une membrane de fibre creuse ou capillaire (1) étant constituée de matériau céramique ou contenant de la céramique et introduite dans celui-ci, ainsi que
c) au moins un enrobage (3) configuré sous forme de composé imperméable aux gaz entre le corps moulé (2) et la au moins une membrane de fibre creuse ou capillaire (1),
**caractérisé en ce que** l'enrobage (3) comprend au moins trois couches (4), (5), (6) constituées d'au moins deux masses de remplissage différentes, les deux couches externes étant constituées de matériau céramique ou contenant de la céramique et le couche intermédiaire de verre ou de métal, le point de ramollissement de matériau du verre ou métal utilisé pour la couche intermédiaire (5) étant inférieur à la température de frittage du matériau céramique ou contenant de la céramique des deux couches externes (4), (6) et supérieur à la température de service du module.

2. Module selon la revendication 1, au moins l'une des au moins trois couches (4), (5), (6) étant constituée d'un matériau qui est compatible avec le matériau de la au moins une membrane de fibre creuse ou capillaire (1).

3. Module selon la revendication 1, au moins l'une des au moins trois couches (4), (5), (6) étant constituée du même matériau céramique ou contenant de la céramique tel que la au moins une membrane de fibre creuse ou capillaire (1).

4. Module selon l'une des revendications précédentes, le au moins un enrobage (3) étant constitué de deux couches externes (4), (6) et d'une couche intermédiaire (5) se trouvant entre les deux.

5. Module selon l'une des revendications précédentes, le au moins un enrobage (3) comprenant trois couches (4), (5), (6) constituées au total de trois masses de remplissage différentes.

6. Module selon l'une des revendications 1 à 4, le au moins un enrobage (3) comprenant trois couches (4), (5), (6) constituées au total de deux masses de remplissage différentes, les deux couches externes (4), (6) étant constituées de la même masse de remplissage.

7. Module selon l'une des revendications précédentes, le matériau céramique ou contenant de la céramique des deux couches externes (4), (6) présentant une haute mouillabilité pour le verre ou métal utilisé pour la couche intermédiaire (5).

8. Module selon l'une des revendications précédentes, la viscosité du verre ou métal utilisé pour la couche intermédiaire (5) permettant, lors d'un frittage, la fermeture de petites pores et fentes dans l'une des deux couches externes (4 ou 6).

9. Module selon l'une des revendications précédentes, les coefficients d'expansion des masses de remplissage des au moins trois couches (4), (5), (6) et de la au moins une membrane de fibre creuse ou capillaire (1) ayant une différence inférieure ou égale à 5 x 10⁻⁶ K⁻¹ ou étant égaux.

10. Module selon l'une des revendications précédentes, les masses de remplissage des au moins trois couches (4), (5), (6) étant chimiquement inertes par rapport à la au moins une membrane de fibre creuse ou capillaire (1).

11. Module selon l'une des revendications précédentes, la au moins une membrane de fibre creuse ou capillaire (1) étant respectivement introduite dans un enrobage (3) au niveau de ses deux extrémités.

12. Procédé de fabrication d'un module, notamment selon l'une des revendications 1 à 11, comportant les étapes suivantes dans la séquence indiquée
a) introduction d'au moins une membrane de fibre creuse ou capillaire (1) constituée de matériau céramique ou contenant de la céramique dans un corps moulé (2),
b) introduction d'une première masse de remplissage dans le corps moulé (2),
c) formation d'une première couche (4) d'un enrobage (3) à partir de la première masse de remplissage introduite,
d) introduction d'une deuxième masse de remplissage dans le corps moulé (2),
e) formation d'une deuxième couche (5) d'un enrobage (3) à partir de la deuxième masse de remplissage introduite,
f) introduction d'une troisième masse de remplissage dans le corps moulé (2), et
g) formation d'une troisième couche (6) d'un enrobage (3) à partir de la troisième masse de remplissage introduite,
**caractérisé en ce que** les première et troisième masses de remplissage se composent de matériau de céramique ou contenant de la céramique et la deuxième masse de remplissage se compose de verre ou de métal, le point de ramollissement de matériau du verre ou métal utilisé pour la deuxième couche (5) étant inférieur à la température de frittage du matériau céramique ou contenant de la céramique de la première et de la troisième couche (4), (6) et supérieur à la température de service du module, et le module étant fritté en debout.

13. Procédé selon la revendication 12, au moins un deuxième enrobage (3) étant introduit et formé dans le corps moulé (2).

14. Procédé selon l'une des revendications 12 ou 13, les couches formées (4), (5), (6) du au moins un enrobage (3) étant durcies.

15. Procédé selon la revendication 14, une couche introduite et formée du au moins un enrobage (3) étant durcie avant l'introduction d'une autre masse de remplissage.

16. Procédé selon la revendication 14, les couches du au moins un enrobage (3) formées par les masses de remplissage étant durcies simultanément après l'introduction et la formation de toutes les masses de remplissage.

17. Procédé selon l'une des revendications 12 à 16, les matériaux formant les masses de remplissage étant introduits sous forme de barbotine.

18. Procédé selon la revendication 17, la barbotine introduite étant formée par dispersion de matériau d'enrobage particulaire dans un liquide.

19. Procédé selon l'une des revendications 12 à 18, la première couche (4) du au moins un enrobage (3) étant annexée à une oblitération (7).

20. Procédé selon l'une des revendications 12 à 18, la masse de remplissage de la première couche (4) du au moins un enrobage (3) étant introduite sous forme d'oblitération (7).

21. Procédé selon l'une des revendications 19 ou 20, le matériau de l'oblitération (7) étant sélectionné parmi des matériaux céramiques, matériaux contenant de la céramique, cires, polymères, adhésifs et combinaisons de ceux-ci.

22. Procédé selon l'une des revendications 19 à 21, l'oblitération (7) étant ablatée après introduction et durcissement d'au moins une couche (4), de préférence toutes les couches (4), (5), (6), du au moins un enrobage (3).

23. Procédé selon l'une des revendications 12 à 22, les au moins trois couches (4), (5), (6) du au moins un enrobage (3) étant tour à tour formées par un procédé de centrifugation.

24. Procédé selon l'une des revendications 12 à 23, la au moins une membrane de fibre creuse ou capillaire (1) étant introduite à l'état non fritté dans un corps moulé (2).

25. Procédé selon l'une des revendications 12 à 23, la au moins une membrane de fibre creuse ou capillaire (1) étant introduite à l'état fritté dans un corps moulé (2).

26. Procédé selon l'une des revendications 14 à 25, le module étant fritté en une étape après le durcissement de toutes les couches formées.

27. Procédé selon l'une des revendications 14 à 25, le module étant fritté en plusieurs étapes après le durcissement de toutes les couches formées.

28. Procédé selon l'une des revendications 26 ou 27, la température de frittage correspondant au point de ramollissement de matériau du verre ou métal utilisé pour la couche intermédiaire (5).

29. Procédé selon l'une des revendications 26 ou 27, la température de frittage étant supérieure au point de ramollissement de matériau du verre ou métal utilisé pour la couche intermédiaire (5) et inférieure à la température de frittage du matériau céramique ou contenant de la céramique de la au moins une membrane de fibre creuse ou capillaire (1).

30. Procédé selon l'une des revendications 26 ou 27, la température de frittage étant égale à la température de frittage de la au moins une membrane de fibre creuse ou capillaire (1).

31. Procédé selon l'une des revendications 26 à 30, une cavité (8) étant formée entre la couche intermédiaire (5) et une couche externe (4) ou (6) par le biais du compactage, provoqué par le frittage, du verre ou métal utilisé pour la couche intermédiaire (5).

32. Procédé selon l'une des revendications 26 à 31, une partie du verre ou métal utilisé pour la couche intermédiaire (5) infiltrant (9), suite au frittage, les pores d'une partie du matériau céramique ou contenant de la céramique d'une couche externe (4) ou (6).

33. Module selon l'une des revendications 1 à 11 pouvant être obtenu grâce à un procédé selon l'une des revendications 12 à 32.

34. Dispositif comportant un module selon l'une des revendications 1 à 11 et un boîtier.

35. Dispositif selon la revendication 34, le boîtier étant configuré sous forme de cartouche métallique.

36. Dispositif selon la revendication 35, le corps moulé et le boîtier ayant une configuration cylindrique.
